# EUROPEAN PATENT SPECIFICATION

(11) **EP 2 734 391 B1**
(45) Date of publication and mention of the grant of the patent: **29.06.2016**
(21) Application number: 12759182.4
(22) Date of filing: 20.07.2012
(51) Int. Cl.: B60K 6/442, B60K 6/387, B60W 10/06, B60W 10/02, B60W 10/08, B60W 20/00

(54) **HYBRID PROPULSION VEHICLE**
FAHRZEUG MIT HYBRIDANTRIEB
VÉHICULE À PROPULSION HYBRIDE

(30) Priority: 22.07.2011 IT PD20110252
(43) Date of publication of application: 28.05.2014
(73) Proprietor: Mecaprom Technologies Corporation Italia S.r.l., 24121 Bergamo (IT); Micro-Vett S.p.a., 40026 Imola (Bologna) (IT)
(72) Inventor: REGIS, Fabrizio, I-10020 Casalborgone (TO) (IT); DI GIOIA, Gaetano, I-40022 Castel del Rio (BO) (IT)
(74) Representative: Gallo, Luca
(86) International application number: PCT/IB2012/001409
(87) International publication number: WO 2013/014510

(56) References cited:
- EP-A1- 1 782 988
- WO-A1-2008/092353
- DE-A1- 19 917 665
- US-A- 5 845 731
- US-A1- 2001 039 230
- US-B1- 6 740 002

## Description

### Field of application

The present invention regards a hybrid propulsion vehicle of the type provided with an electric motor and a combustion engine, according to the preamble of the independent claim.

The present vehicle is intended to be advantageously employed for vehicles designed for moving both in an urban and extra-urban setting.

The invention is therefore situated in the automobile industry field, and in particular in the field of vehicles with mixed electrical and combustion propulsion.

### State of the art

As is known, in the last few years, in order to limit the pollution produced by transport means in urban areas, and in order to optimize energy consumptions, automobile production companies have introduced so-called hybrid propulsion vehicles on the market. Such vehicles are equipped with at least two different propulsor types adapted to generate power, each drawing from a different energy source, typically one with electric motor and one with thermal motor (combustion).

Each hybrid vehicle is also usually capable of exploiting, in the slowdowns, the capacity of the electric motor to reversibly function, i.e. to brake the vehicle, generating energy towards a storage group which would otherwise be dissipated in the brakes.

The electrical energy produced can be stored, as a non-limiting example, in storage groups based on lithium chemistry (lithium-ions, lithium-polymers) or in supercapacitors.

In this field, research is mainly aimed to define the mechanical and control configurations aimed to exploit, in the best possible modes, the complementary characteristics of the two propulsion systems; this in order to limit (for example) the pollution in urban areas, in order to reduce the overall energy consumption etc..

The internal combustion engine has the advantage of transforming the chemical energy of the fuel, which can be easily supplied by the existing widespread fuel supply network, with a rather high efficiency even if within defined motor functioning speeds.

The electric motor has the advantage of converting the electrical energy with greater efficiency and versatility than the combustion engine, but it has the drawback that it can arrange only a small quantity of energy on board the vehicle, and currently such energy cannot be as easily and quickly supplied as the fossil fuels (gas, diesel, LPG, methane etc.).

The hybrid propulsion vehicles currently available on the market mainly employ two different hybrid propulsion configurations, known as series hybrid and parallel hybrid.

In the (extended range) series hybrid configuration, at least one electric machine is mechanically connected to the drive wheels, in order to generate a traction torque, while the combustion engine is decoupled from the traction system and has the task of generating electric power, through a second electric machine, in order to supply the electric traction motor with power. The electric current generated by the second machine, connected to the combustion engine, is transferred to the electric traction motor and/or to the provided energy storage means.

In case of high torque requirements, the electric traction motor can be power supplied both by the energy produced by the thermal motor, through the generator, and by the energy stored in the batteries.

The internal combustion engine is set to function within a specific speed and load interval, aimed to optimize its efficiency.

The vehicles which employ a series hybrid propulsion offer the advantages deriving from the availability of mobility in pure electric state, preferably to be used in urban and suburban use and extendible to extra-urban travel, by means of the aid of the on-board current generator, which produces power through the auxiliary endothermal engine. The presence of multiple electric machines also allows maximizing the quantity of energy recovered during the braking steps, whereas in a conventional hydraulic mechanical braking system, such energy is dissipated.

In the parallel hybrid configuration, the motor propulsion system includes, in addition to the endothermal engine and a transmission system, a single reversible electric machine, which alternately carries out the functions of motor and generator. The traction torque is mainly produced by the endothermal engine, with the aid of the electric machine, when controlled as a motor. If equipped with suitable connection and disconnection devices between the motors and the transmission, the system allows the use of the electric machine for the electric traction functions, at low speeds and limited to the energy availability of the storage group, starter group, acceleration group, torque booster group and generator group. The parallel hybrid configurations allow a greater extra-urban autonomy, with respect to the series hybrid configurations, since the traction is mainly ensured by the endothermal engine. The electric motor contributes to reducing the carbon dioxide emissions (CO₂) and hence the consumptions, since it substitutes or assists the endothermal engine in acceleration and in low speed travel. Mixed hybrid configurations are also known in which both the electric motor and the thermal motor are coupled to the distribution shaft for the traction torque, as in the parallel hybrids, and in which the endothermal engine is connected to a generator in order to supply current to the electric motor, as in the series hybrids.

The hybrid propulsion configurations present up to now on the market are not particularly efficient in making use of the motors and the electric machines mounted on board, with the result that they are borne even if they are employed in an inefficient manner; for example, the electric machines are sometimes employed only for reduced times or in limited circumstances.

Such disadvantageous circumstance negatively impacts the overall efficiency of the vehicles, or the production cost thereof.

From documents WO 2008/092353, which discloses the features of the preamble of claim 1, and US 6,740,002 are known hybrid propulsion vehicles comprising a first electric motor, a reversible electric machine, and an internal combustion engine mechanically and selectively couplable to said reversible electric machine by means of second engagement means. The reversible electric machine is adapted to selectively operate as a generator for charging said means for storing electrical energy or as a second electric motor, selectively mechanically couplable to said first electric motor by means of first engagement means. Many mechanical parts such as engaging means are provided in order to selectively mechanically couple the electric motor to the first electric motor and the internal combustion engine to the reversible electric machine. These known hybrid propulsion vehicles do not have a distribution of electric and combustion machines as well as of the mechanical parts, suitable to allow an optimal organization of the volume of the engine compartment. In particular, solutions with the shaft of the combustion engine aligned with the shaft of the electric motor and with the shaft of the reversible electric machine do not allow an optimization of the space and involve a very bulky allocation for the engagement means.

### Presentation of the invention

In this situation, the problem underlying the present invention is therefore that of overcoming the drawbacks seen in the solutions of known type (series hybrid, parallel hybrid and series-parallel hybrid) by providing a hybrid propulsion vehicle which allows combining in an efficient manner, through a suitable control system, the functioning of an endothermal engine and the electric machines on board the vehicle.

A second object of the present invention is to obtain a vehicle whose use can be varied in a versatile manner, in order to optimize specific functioning needs connected to the use of the batteries, to the consumption of electrical energy, to the consumption of fuel and to the pollution produced.

A third object of the present invention is to obtain a vehicle which, even if optimized for a mainly urban functioning, can be advantageously employed even for completing large distances.

Another object of the present invention is to obtain a hybrid propulsion vehicle that is structurally simple, inexpensive to produce and entirely reliable in operation.

These and other objects are all achieved by the hybrid propulsion vehicle, object of the present invention, according to the below-reported claims.

### Brief description of the drawings

The technical characteristics of the invention, according to the aforesaid objects, can be clearly seen from the contents of the below-reported claims, and the advantages of the same will be more evident from the following detailed description, made with reference to the enclosed drawings which represent a merely exemplifying and non-limiting embodiment thereof, in which:
**FIG. 1** shows an overall schematic view of the hybrid propulsion vehicle, object of the present invention, with the main electric power connections indicated between the groups employed for the traction of the vehicle; also indicated are the main signal connections to the functioning control units of the vehicle;
**FIG. 2** shows a functional logic scheme of the groups employed for the traction of the vehicle according to the present invention, represented in a first operating configuration with nominal electrical traction;
**FIG. 3** shows the functional logic scheme of figure 2, with the groups for the traction of the vehicle represented in a second operating configuration with electrical traction and high power;
**FIG. 4** shows the functional logic scheme of figure 2, with the groups for the traction of the vehicle represented in a third on-board operating configuration for recharging the storage means;
**FIG. 5** shows a variant embodiment of the functional logic scheme of figure 4, with the groups for the traction of the vehicle represented in a fourth operating configuration which allows the direct recirculation of power between the first electric machine, controlled as a generator, and the second electric machine, controlled as an electric traction motor;
**FIG. 6** shows the functional logic scheme of figure 2, with the groups for the traction of the vehicle represented in a fifth operating configuration for a direct mechanical assistance of the traction by a combustion engine;
**FIG. 7** shows the functional logic scheme of figure 2, with the groups for the traction of the vehicle represented in a sixth operating configuration marked by a complete traction by the combustion engine;
**FIG. 8** shows the functional logic scheme of figure 2, with the groups for the traction of the vehicle represented in a seventh operating configuration for the recovery of the braking energy;
**FIG. 9** shows the functional logic scheme of figure 2, with the electrical energy storage means being recharged.

### Detailed description of a preferred embodiment

With reference to the drawing set, a hybrid propulsion vehicle that is the object of the present invention is indicated in its entirety with 1.

With the term 'vehicle', it is intended hereinbelow to indicate any one means equipped with wheels and susceptible to advancing on road for the transportation of people or things, such as a car, a van, a truck or similar vehicles.

Particular reference will be made below to the preferred embodiment of the present invention regarding an automobile comprising, in an entirely conventional manner, a support frame lying on the ground by means of drive wheels and possibly also only driven wheels.

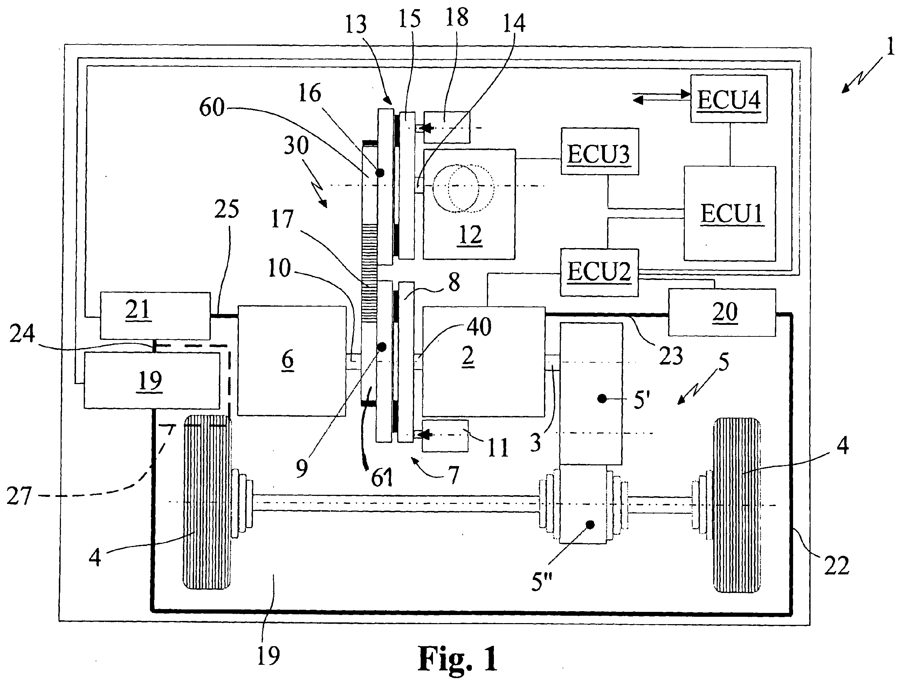

Associated with the vehicle propulsor system described below is a control system, indicated with CS overall. In the embodiment illustrated in a simplified manner in the scheme of figure 1, the control system CS comprises three electronic control units ECU1, ECU2, ECU3, interconnected with a fourth control unit UCU4, to which the functions of traction system regulator and vehicle supervision are attributed, e.g. through a communication system based on a CAN (Controlled Area Network) protocol.

The aforesaid units will be detailed below with the introduction of the different groups of the propulsion system of the vehicle 1.

The vehicle frame supports, preferably inside the engine compartment 100, a first electric motor 2, which is advantageously constituted by an alternating current brushless motor, e.g. with about 15 kW of nominal power for the propulsion of a small city car; that said, without departing from the protective scope of the present patent, such motor can of course have different power in accordance with the specific applications, and a different motor type can be present, such as an asynchronous motor.

The shaft 3 of the aforesaid first electric motor 2 is mechanically connected to the drive wheels 4 of the vehicle 1 by means of transmission means 5, which transmit the drive torque produced by the first motor 2 to the drive wheels 4.

The aforesaid transmission means 5 are of *per se* conventional type and comprise, for example, a speed reducer 5' mechanically connected to a differential member 5" which distributes the twisting moment of the shaft 3 of the first motor 2 to the two drive wheels 4.

The vehicle 1 according to the invention is then provided with a reversible electric machine 6, it too advantageously inserted inside the engine compartment 100, adapted to selectively operate as a generator or as a second electric motor.

Its functioning, in the two different modes, is controlled by an electric power control unit ECU2 (ECU E-drive) subjected to the control of a main control unit ECU1 (Master ECU), as is better described below.

The aforesaid reversible electric machine 6 is also advantageously constituted by an alternating current brushless motor, with lower nominal power than that of the first motor 2.

Such reversible machine 6 is selectively mechanically couplable to the first electric motor 2 by means of first engagement means 7, and therefore it is not directly mechanically connectable to the drive wheels 4 of the vehicle 1. The first engagement means 7 can be actuated, by the control system CS, between a first coupling position, in which they mechanically connect the reversible electric machine 6 with the first electric motor 2, and a first decoupling position, in which they separate the reversible electric machine 6 from the first electric motor 2.

As will be better described below, the first engagement means 7 are actuated between the two abovementioned positions, by the electric power control unit ECU2 in turn controlled by the main control unit ECU 1.

The first engagement means 7 are for example obtained with an axial coupling group between gears respectively connected to the shaft 40 of the first motor 2 and to the shaft 10 of the reversible machine 6, i.e. with a gear shift group or with a clutch group.

More in detail, the shaft 40 of the first motor 2 has a first end 40' mechanically connected, by means of the first engagement means 7, to the shaft 10 of the reversible machine 6; shaft 40 also has an opposite second end 40" mechanically connected to the transmission means 5 in turn mechanically connected to the wheels 4 of the vehicle in order to move it. Advantageously, therefore, the transmission means 5 are not interposed between the two electric motors 6 and 2 but are instead arranged on the side of the first motor 2 opposite the position of the reversible machine 6.

The latter provides, in an exemplifying and non-limiting embodiment, that the shaft 3 of the first motor 2 has the end opposite that of torque transfer with grooved form and engaged in a counter-shaped seat of a first movable clutch disc 8. The latter faces a first fixed clutch disc 9, in turn fit on the shaft 10 of the reversible machine 6.

The first engagement means 7 also comprise a first actuator 11, electromechanical or electrohydraulic, e.g. of induction type, with a solenoid that actuates a lever to move the first movable clutch disc 8 along the shaft 3 of the first motor 2 against the first fixed clutch disc 9 in order to reach the coupling position; or, it actuates the lever to move the first movable clutch disc 8 along the shaft 4 of the first motor 2 away from the first fixed clutch disc 9, in order to reach the decoupling position.

Of course, the clutch group can be obtained in many other configurations that are well known to the man skilled in the art, and in particular it can be obtained with a magnetic clutch.

The vehicle 1 also provides an internal combustion engine 12, it too preferably inserted inside the engine compartment 100, and such engine 12 is selectively mechanically couplable to the reversible electric machine 6 by means of second engagement means 13. A combustion engine control unit ECU3 is provided which supervises the management of the internal combustion engine 12. Sensors indicative of motor functioning are connected with such unit, such as a sensor for the rotation speed of the shaft 14 of the motor 12, a phase sensor for understanding when the cylinders are on the top dead center in expansion position, a detonation sensor, a water temperature sensor, a control actuator for feeding the motor 12 with the fuel or with the fuel mixture (e.g. constituted by a conventional valve in the throttle bodies of the combustion motors), a lambda probe, etc. The second engagement means 13 are in turn actuatable by the control system CS between a second coupling position, in which they mechanically connect the reversible electric machine 6 to the combustion engine 13, and a second coupling position in which they separate the reversible electric machine 6 from the combustion engine 13.

As is better described below, the second engagement means 13 are actuated between the two positions by the electric power control unit ECU2 in turn controlled by the main control unit ECU 1.

The second engagement means 13 are equivalent, *mutatis mutandis,* to those described above interposed between the first motor 2 and the reversible electric machine 6.

More in detail, these too can be obtained with an axial coupling group between gears respectively connected to the shaft 14 of the combustion engine 12 and to the shaft 10 of the reversible machine 6, i.e. with a clutch group or with a gear shift group.

The latter provides in this case, in an exemplifying and non-limiting embodiment, that the shaft 14 of the combustion engine 12 has a grooved form and is engaged in a counter-shaped seat of a second movable clutch disc 15. The latter faces a second clutch disc 16, idly mounted by means of a bearing on the same shaft 14 of the combustion engine 12 and integral with a first pulley 60. A motion transmission belt 17 is wound as a ring on the first pulley and on a second pulley 61 fit on the shaft 10 of the reversible machine 6. The second engagement means 13 also comprise a second actuator 18, preferably of induction type with a solenoid that actuates a lever in order to move the second movable clutch disc 15 along the shaft 14 of the combustion engine 12 against the second clutch disc 16, in order to reach the second coupling position; or, it actuates the lever to move the second movable clutch disc 15 along the shaft 14 of the combustion engine 12 away from the second clutch disc 16, in order to reach the decoupling position. Between the aforesaid two electric motors 2 and 6, the following are interposed: first engagement means 7 and at least the second engagement means 13 in part.

More clearly, at least part of the gears of the axial coupling group which preferably attains the second engagement means 13 is physically positioned between the first electric motor 2 and the reversible electric machine 6 laterally alongside the first engagement means 7 in order to reduce the overall bulk of the vehicle mechanism.

In the case of the above-considered example relative to one embodiment of the second engagement means, the second pulley 61, which bears the motion transmission belt 17 wound thereon, is fit on the shaft 10 of the reversible machine 6 and interposed between the reversible electric machine 6 and the first engagement means 7.

Advantageously, in accordance with a preferred embodiment of the present invention, the internal combustion engine 12 is an engine of boxer type, which having more compact size than that of the V-shaped engines of conventional type, ensures the possibility of housing the first electric motor 2, the reversible electric machine 6 and the internal combustion engine 12 together with the groups of batteries described below, all together inside the same engine compartment 100.

The vehicle 1 furthermore provides means for storing electrical energy 19, which are constituted by supercapacitors and preferably by groups of batteries. The storage groups are preferably obtained with cells based on lithium chemistry (lithium ions, lithium polymers, etc.) which come to constitute an electrical energy reserve, e.g. on the order of 12 kWh. The battery groups 19 are obtained in a *per se* conventional manner, placing multiple cells in series with each other. Each cell is temperature- and voltage-controlled, and is connected in series with other cells to form a series of cells. Each series of cells preferably has a current and voltage sensor. If one or more cells are short-circuited, the series of cells can be isolated and bypassed, since otherwise all the cells of an entire series would be overloaded.

Multiple series of cells are in turn connected together in series and in parallel with each other, in accordance with the voltage to be produced (e.g. 80-100 volt), in order to form battery groups. Each group is advantageously provided with a disconnecting switch in order to be electrically isolated, in case of a failure of one cell thereof. Each battery group is provided with an electronic control unit, adapted to measure functioning parameters such as the voltage of each single cell and the temperatures of specific zones, and to actuate the control and energy balancing and/or capacitive balancing of every single cell, and equipped with a communication system, as a non-limiting example based on a CAN protocol, adapted to transfer and receive information from a centralized electronic unit contained in the electric power control unit ECU2 (power electronics). Therefore, temperature, voltage and current sensors are provided, associated with the cells, with the groups of cells and with the entire battery back and connected to the respective local control electronics or to the overall electric power control unit ECU2. Through such sensors, the electric power control unit ECU2 determines the functioning status of the battery group storage means 19 in order to control, in accordance with the operating logic programmed in the main control unit ECU1, the functioning of the propulsion groups as specified below.

The abovementioned two electric machines, i.e. the first electric motor 2 and the reversible electric machine 6, are respectively connected to a first electronic power converter 20 and to a second electronic power converter 21.

The two converters could be integrated in a single electronic converter with the same casing, capable of managing two separate power electronics.

Each electronic power converter 20, 21 is sized in order to supply a net power equal at least to that of peak power (e.g. 20 Kwatt), suppliable by the motor, and it integrates a DC/DC converter (e.g. of 600 watt step-down type), with 12-volt controlled output, adapted to supply the auxiliary battery with low voltage for vehicle 1 consumption.

The electric power control unit ECU2 manages the first electric motor 2, the reversible electric machine 6, and the two electronic power converters 7 and 13.

More in detail, the first electronic power converter 20 is electrically connected to the storage means 19 by means of a first electric power connection 22 and to the first electric motor 2 by means of a second electric power connection 23.

In turn, the second electronic power converter 21 is electrically connected to the storage means 19 by means of a third electric power connection 24 and to the reversible machine 6 by means of a fourth electric power connection 25.

The abovementioned electronic control system CS is connected to the first electric motor 2, to the reversible electric machine 6, and to the two electronic power converters 20, 21, advantageously through the electric power control unit ECU2, to the internal combustion engine 12 through the combustion engine control unit ECU3 and to the vehicle control unit through a further vehicle control unit ECU4 in order to control the propulsion of the vehicle according to programmable operating modes.

According to the idea underlying the present invention, the first converter 20 is actuatable by the control system CS to receive a first direct current from the storage means 19, by means of the first electrical connection 22, and to generate a first controlled current with which to set the first electric motor 2 in rotation, by means of the second electrical connection 23. Such functioning mode is verified in all the cases in which an at least partially electrical traction condition is provided in accordance with the functioning conditions pre-established by the main control unit ECU1 as a function of the signals received by the electric power control unit ECU2 (in particular with reference to the signals of the sensors of the storage means 19) and as a function of the signals received by a further control unit ECU4 intended to control the general functions of the motor vehicle and in particular the driver power request by means of a manual control apparatus, for example as a function of the position assumed by the accelerator pedal (or another control means such as a joystick). Such vehicle control unit ECU4 is connected with (among other things) an instrument panel of the vehicle, the vehicle actuators, dashboard, ABS etc..

The second converter 21 is actuatable by the control system CS to receive a second direct current from the storage means 19, by means of the third electrical connection 24, and to generate a second controlled current with which to set the reversible machine 6 in rotation, in its functioning as a second motor, by means of the fourth electrical connection 25.

The second converter 21 can be otherwise actuated by the control system CS to transform a first variable current produced by the reversible machine 6, in its functioning as a generator, into a first rectified direct current for charging the storage means 19 by means of the third electrical connection 24.

The control system CS, and in particular its main control unit ECU1, are also connected to the first and second engagement means 7, 13 in order to move them between the above-described two coupling and decoupling positions. In particular, they control the first and the second actuators 11 and 18 in order to move the movable discs 8 and 15 of the two clutch groups.

In accordance with the idea underlying the present invention, two electric machines are therefore provided, preferably mounted in line along one same axis. One such machine is indicated with 2, and operates as a first electric motor; the other, indicated with 6, operates as a second motor in series with the first for contributing to the power required for advancing the vehicle, the first engagement means being in the first coupling position, or as a alternator, the first engagement means being in the first decoupling position and the second engagement means in the second coupling position, in order to generate electric supply current to the storage means 19 or directly to the first motor 2. The combustion engine 12, as a function of the conditions controlled by the control system CS, (as will be better seen below) can supply electric power through the reversible electric machine 6 functioning as an alternator (as in a series hybrid configuration); such power is supplied to the vehicle 1 for charging the storage means 19 or for directly feeding the first electronic converter 20 of the first motor 2. Such functioning of the combustion engine 12 corresponds with an at least partially electrical condition of the vehicle 1, and the second engagement means 13 are correspondingly controlled in order to be arranged by the control system CS in the second coupling position while the first engagement means 7 are controlled to be arranged in the first decoupling position. Otherwise, the combustion engine 12 can supply mechanical power to the shaft 3 of the first electric motor 2, and in this case both the engagement means 7, 13 are correspondingly controlled to be arranged by the control system CS in the relative coupling position.

The two electric machines 2 and 6 can be assembled in line or in cascade with the first engagement means interposed, forming an electrical assembly 30 with very compact size, easily adaptable to any engine compartment.

Therefore, according to the invention, the vehicle 1 comprises two mechanically couplable electric machines 2, 6 which can function with only one as a motor (only the first motor 2) or both as motors, in series with each other (first motor 2 and reversible machine 6 as a second motor) or one as a motor (first motor 2) and the other as a alternator generator (reversible machine 6).

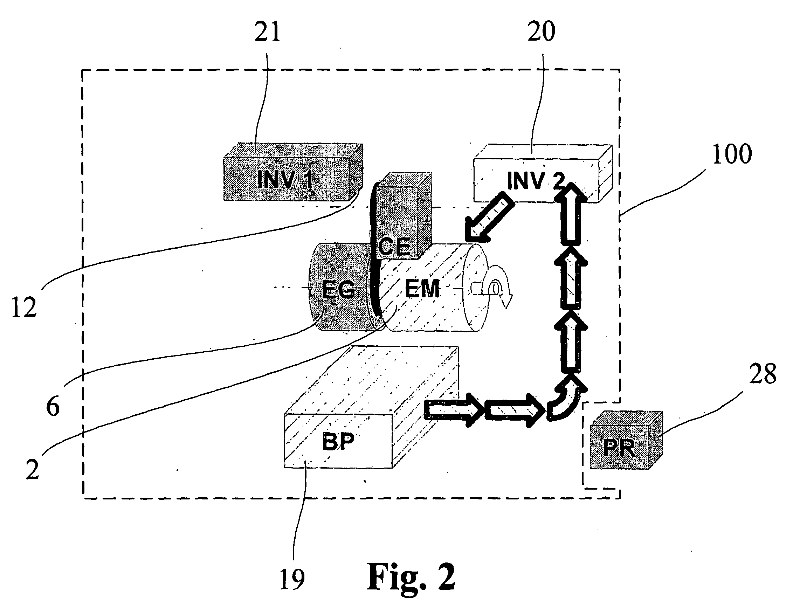

With reference to the different possible propulsion operating configurations allowed by the vehicle 1, object of the present invention and illustrated in the enclosed figures 2-9, the following is underlined.

Figure 2 represents a nominal traction condition of the vehicle 1, in which the first converter 20 receives a first current from the storage means 19, by means of the first electrical connection 22, and generates a first controlled current with which, by means of the second electrical connection 23, it sets in rotation the first electric motor 2 in order to generate a drive torque for advancing the vehicle.

In this nominal traction condition (figure 2), the electric machine 6 and the combustion engine 12 are deactivated and the first and the second engagement means 7, 13 are in decoupling position.

Such nominal traction functioning condition is possible with a charge of the battery group 19 greater than a minimum charge threshold value, detected by the electric power control unit ECU2, and with a power request by the driver below a maximum torque threshold value, detected by the vehicle control unit ECU4.

For example, the main control unit ECU1 detects that the battery group 19 is charged beyond minimum charge threshold value, e.g. 20% over, by means of the electric power control unit ECU2, and that there is a torque request via accelerator pedal detected by the vehicle control unit ECU4 below a maximum torque threshold value. At this point, the main control unit ECU1 considers that the power of the first motor 2 fed by the battery group 19 is sufficient, and it determines the functioning at the nominal traction condition for a pure electric vehicle.

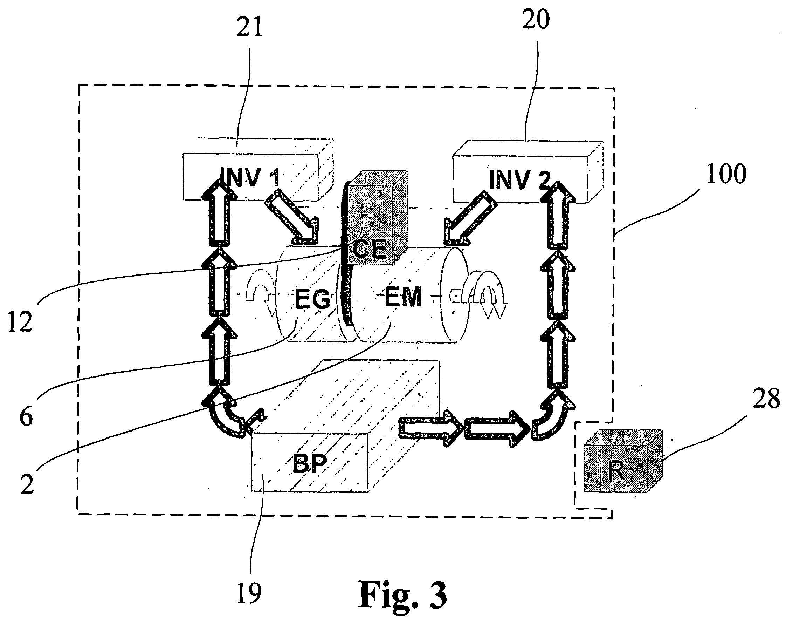

If a torque is required that is greater than the maximum torque threshold value (detected by the vehicle control unit ECU4 by means of the detection of the accelerator position, and communicated to the main control unit ECU1), and the charge of the battery group 19 is greater than the minimum charge threshold value, then the control system CS controls the attainment of a high electric power traction condition (figure 3).

In order to reach such condition, the control system CS controls the first engagement means 7 such that they are moved into the first coupling position, mechanically connecting the reversible machine 6 to the first motor 2. The control system CS also controls the second electronic converter 21 to feed the reversible electric machine 6 with the first controlled current, controlling it to operate as a second motor in series with the first electric motor 2 in order to increase the traction torque of the vehicle 1. Advantageously, if the main control unit ECU 1 processes that it is not capable of obtaining the torque requirement with only the first electric motor 2, the torque requirement being greater than the maximum torque threshold value, then it rotates the second motor of the reversible electric machine 6, in an idle manner, and brings it to the speed of the first motor 2 (with a maximum error of less than 10 rev/min, for example, in the abovementioned case of brushless motors) before controlling the passage of the first engagement means 7 into the first coupling position, and then it controls the second electronic converter 21 to send current to the second motor 6 in series with the first 2 in order to supply a greater torque in output at the shaft 3 of the latter mechanically coupled to the drive wheels 4.

Even in this condition with high electric power, the functioning of the vehicle 1 propulsion is completely electric. Such condition is typically reached in case of climbs or in case of a high drive torque requirement, e.g. in passing.

The aforesaid traction functioning condition with high electric power allows exploiting the second motor 6 in order to obtain the required power (only electrically) without subjecting the first motor 2 to overcurrent, which would involve lower efficiencies and risk of engine overheating. In other words, due to the fact that the vehicle 1 must in any case have an electric machine 6 mounted for charging the battery group 19, according to the idea underlying the invention such electric machine 6 is also advantageously employed for providing traction power in series with the first motor 2 (main motor) in a manner so as to fully exploit such electric machine 6. Otherwise, if only employed as an alternator it would have limited use, with regard to increased weight, bulk and production cost, in any case equally present. In addition, the arrangement of such reversible electric machine 6 also as a motor in series with the first 2 allows sizing the latter for a lower power, given that the electric power of the battery group 19 can be fully exploited without overloading the first motor 2, by placing it in series with the second motor represented by the reversible machine 6. Therefore, the sizing of the first electric motor 2 is carried out by considering the aid of the reversible electric machine 6, in second motor mode, in series with the first motor 2.

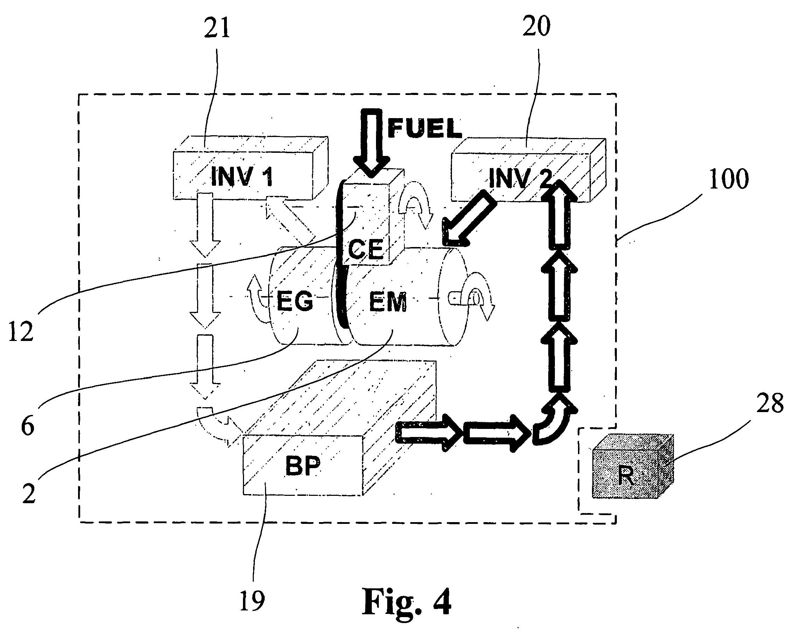

When the charge of the battery group 19 (detected by the electric power control unit ECU2 through the signals produced by the voltage and current sensors associated with the battery group 19) falls below the minimum charge threshold value, the control system CS controls the start of an on-board recharging functioning condition for the battery group 19, by the reversible machine 6 functioning as an alternator (figure 4). For such purpose, in order to reach such recharging condition the control system CS controls the second engagement means 13 such that it is moved into the second coupling position, by mechanically connecting the combustion engine 12 to the reversible machine 6, while the first electric motor 2 continues to be fed by the first electronic converter 20 in order to generate a drive torque for moving the vehicle 1. The reversible electric machine 6 operates as a variable current generator, such current rectified into a second direct current by the second electronic converter 21 for charging the battery group 19.

In such recharging condition, the first engagement means 7 are advantageously in the second decoupling position, since the combustion engine 12 functions at a constant revolution speed adapted to optimize the efficiency thereof, whereas the first electric motor 2 is controlled to rotate as a function of the required torque.

If the charge of the battery group is less than the minimum charge threshold value, e.g. less than 20%, the electric propulsion is set in reduction condition, i.e. with limitation of the performances of the absorbed power, and the aforesaid recharging condition is in any case set. The derating condition, programmed in the main control unit ECU1, avoids that the power absorbed by the first motor 2 from the battery group 19 is greater than that supplied by the alternator 6, in order to prevent continually discharging the battery group 19. Such reduction condition is for example maintained until the charge of the battery group 19 exceeds another threshold, e.g. 40% of the overall charge. This functioning mode does not involve limited delivery of torque and power to the wheels, since the motor 2 is used in simultaneous overloading state, thus ensuring the availability of the requested values.

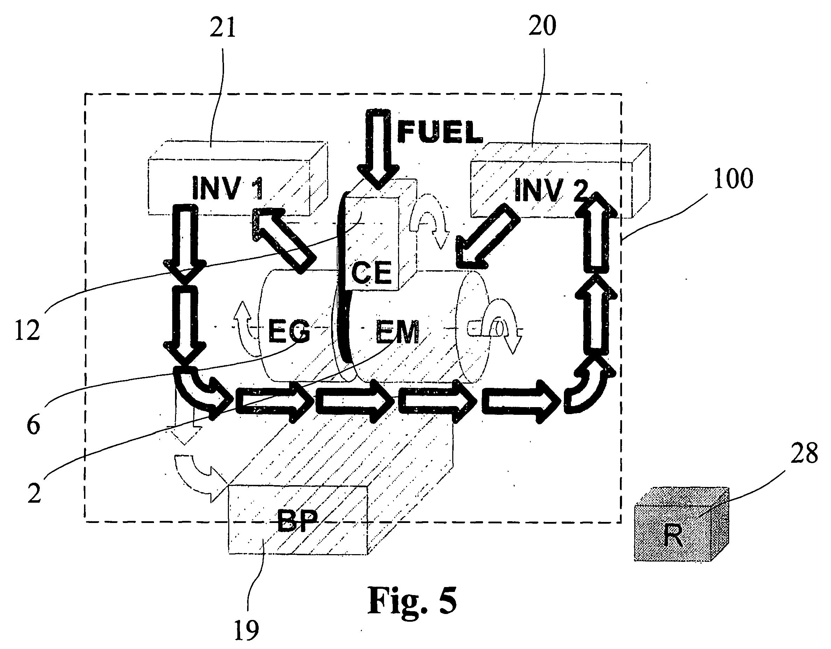

In order to meet high electric power requests from the battery group 19 by the first motor 2, or for the purpose of attaining a gradual recharging of the battery group 19 itself, partition means 26 are provided for the second rectified direct current from the second electronic converter 21. Such partition means are provided in order to feed, by means of a fifth electrical connection 27 (indicated with a dashed line in figure 1), the first electric motor 2 with at least a fraction of the rectified direct current generated by the second electronic converter 21 itself (figure 5).

By means of the second electronic converter 21, it is therefore possible to divert a part of the current generated by the alternator 6 to the first electronic converter 21. In particular, if the current generated by the combustion engine 12 through the alternator 6 is greater than that used by the first electric motor 2, the current produced is not forced to pass through the battery group 19, so as to prevent fatiguing and heating the battery group 19 (extending the lifetime of the latter); the latter only receives the excess current, while the current necessary for making the first motor 2 function is sent directly to the first electronic converter 20.

Advantageously, the electric power produced by the alternator 6 is substantially constant in order to optimize the efficiency of the combustion engine 12, which correspondingly can therefore revolve around a fixed point or at a speed comprised for example between 2600 and 3000 revolutions with a load (throttle opening) ranging between 50 and 100%. In high constant speed conditions, detected by the vehicle control unit ECU4, the control unit CS controls the start of a functioning condition of mechanical assistance of the traction by the combustion engine 12. Such condition for example corresponds to cruising speeds greater than a maximum settable value and possibly to a duration time greater than a maximum settable interval, advantageously in the main control unit ECU1.

Such condition preferably corresponds to extra-urban travel with speed greater than 70 Km / h (for example), in which it is of interest to reduce the consumption of the battery group 19 as much as possible.

In order to reach such condition, the control system CS controls the first engagement means 7 such that they are moved into the first coupling position by mechanically connecting the reversible machine 6 to the first motor 2, and it controls the second engagement means 13 such that they are moved into the second coupling position by mechanically connecting the combustion engine 12 to the reversible machine 6 and, through the latter, to the first motor 2. In this case, however, the reversible electric machine 6 is deactivated (the stator of the brushless motor is not supplied) or disconnected from the battery group 19 and only serves as a mechanical connection element between the combustion engine 12 and the first electric motor 2.

The internal combustion engine 12 is thus mechanically coupled in series with the first electric motor 2 through the reversible machine 6 and through the first and the second engagement means 7 and 13.

The control system CS controls, in this condition, the starting of the combustion engine 12 which supplies torque to the shaft 3 of the first electric motor 2 in order to reduce the electrical consumption of the vehicle 1. The control of the shaft 3 revolutions, in accordance with the torque requirement detected by the vehicle control unit ECU4, is preferably actuated by means of the control of the first electric motor 2, maintaining constant the torque of the combustion engine 12, equal to the value that it is able to supply so as to prevent the consumption of the battery group 19.

The control system CS continues in this case, with respect to the electrical function conditions of figures 2, 3, 4 and 5, to feed the first electric motor 2 with the first electronic converter 20 in order to generate a controllable drive torque for the movement of the vehicle 1.

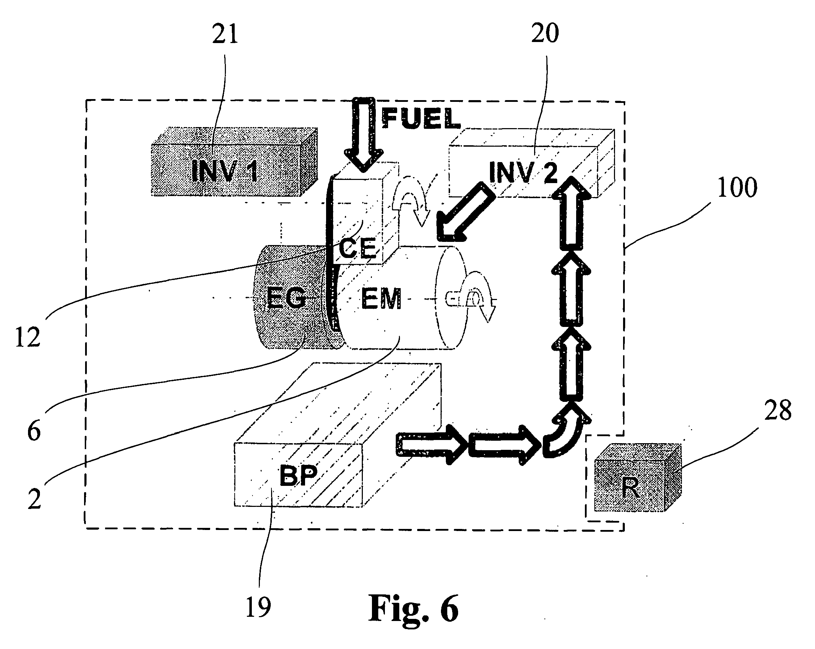

The control of the torque is also carried out in this case by the main control unit ECU1, preferably through the regulation of the speed of the first electric motor 2, while the combustion engine 12 is preferably controlled to function at substantially constant speed, i.e. in a limited speed interval, in order to allow the optimization of its efficiency (figure 6).

In case of interruption of the functioning of the first electric motor 2, the vehicle 1, according to the invention, allows the traction function by means of the use of the generator 6, controlled as a traction motor; and in case of failure of the latter, the vehicle 1 allows setting a traction travel condition completely due to the combustion engine 12 (full mechanical drive).

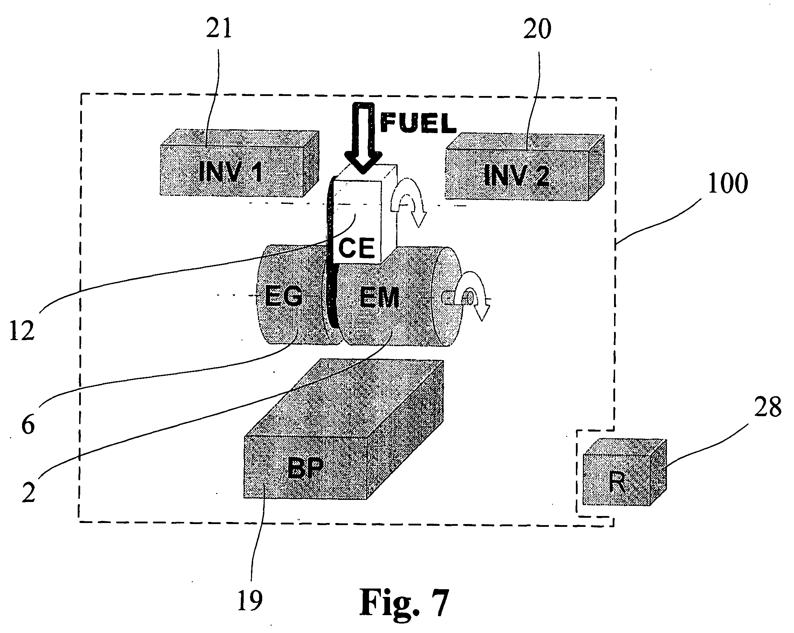

In such condition, represented in figure 7, the control system CS controls the first engagement means 7 and the second engagement means 13 such that they are respectively positioned in the first and second coupling position by mechanically connecting the combustion engine 12 to the first motor 2 and thus to the traction shaft 3 for the drive wheels 4 through the mechanical interposition of the reversible machine 6. Also in this condition, as in the preceding condition assisted by the combustion engine 12, the reversible electric machine 6 is deactivated or disconnected from the battery group 19 and only serves as a mechanical connection element between the combustion engine 12 and the first electric motor 2.

Such condition can be provided as extraordinary and activatable only in case of failure of the first electric motor 2, in order to allow the return home without having to abandon the vehicle 1. In this case, the main control system ECU1 - the electric power control unit ECU2 having received the signals relative to the failure of the first motor 2 - controls the start of the aforesaid functioning condition completely assisted by the combustion engine 12. Nevertheless, such condition can also be provided without a failure condition of the first motor 2, so long as the first engagement means 7 (e.g. with oblique teeth) are associated with a planetary gear, e.g. of automatic type, or with a centrifugal clutch variator.

In all of the abovementioned conditions with total or partial electrical functioning, the regulation of the torque and the speed of the vehicle 1 is in any case always controlled by the main control unit ECU1, in particular through the adjustment of the functioning of the first electric motor 2 and not directly from the position of the accelerator control. Also in the case of drive torque partially or completely originated from the combustion engine, as in the case of the functioning conditions illustrated in figures 6 and 7, the control of the torque is always advantageously actuated through the main control unit ECU1 and not by directly operating with the accelerator on the opening valves for feeding the combustion engine 12.

Therefore, also in the case of purely endothermal traction condition, the control of the combustion engine 12 is not directly actuated by means of the signal determined by the position of the pedal on the accelerator, but it is always the main control unit ECU1 to process the signal and to determine the functioning of the motorized valve (actuator for the throttle) of the combustion engine 12, since the traction always passes from the shaft of the first motor 2 and the main control unit ECU1 accounts for the conditions of the electric machines 2, 6 through the electric power control unit ECU2.

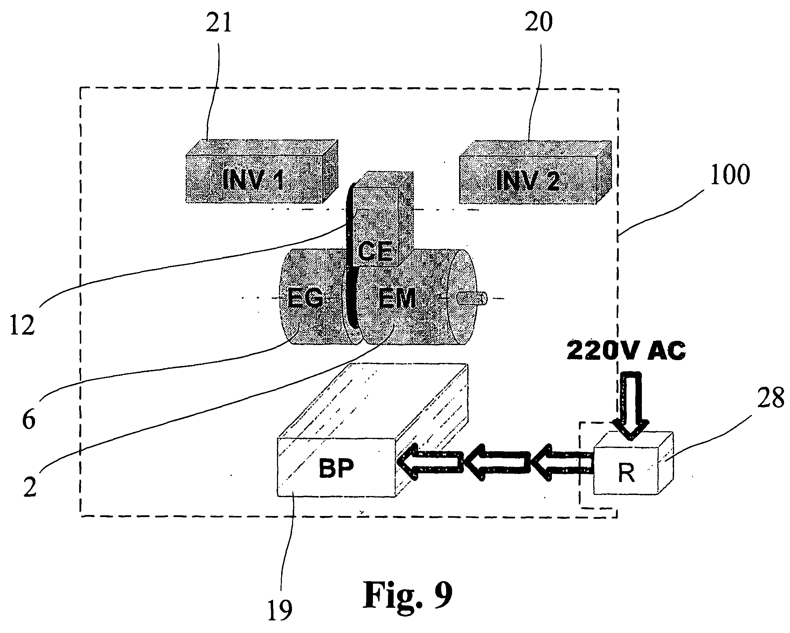

In figure 9, a vehicle stop condition is provided with the battery group 19 in recharging condition, to be carried out by means of the distribution network of the fixed electrical energy and for example at 220 Volt in alternating current.

In such condition, a battery charge 28 transforms the alternating network current into a charge current for the battery group 19.

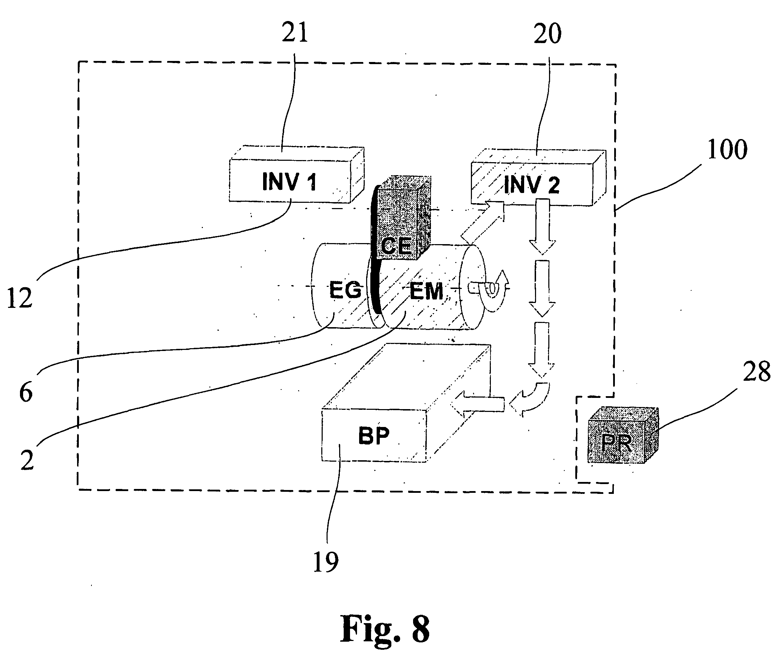

In accordance with a preferred embodiment of the present invention, the first electric motor 2 is obtained with a second reversible electric machine, actuated by the control system CS to selectively operate as a first electric motor in accordance with any one of the above-described configurations described and illustrated in figures 2, 3, 4 and 5 or as a second alternator with its shaft 3 controlled to accelerate by the drive wheels 4 in the direction opposite that of traction, in accordance with an energy recovery condition illustrated in figure 8. In the functioning as a second alternator, the control system CS controls the second converter 21 to transform the second variable current generated by the second alternator into a second rectified direct current for charging the storage means 19 by means of the first electrical connection 22.

The transformation of the mechanical energy of the braking into electrical energy by means of the second alternator allows charging the battery group 19 with energy which otherwise would be lost, and without using the fuel of the combustion engine 19 or the electrical energy of the network.

The aforesaid energy recovery condition is incompatible with the condition of both the engagement means 7, 13 arranged in coupling position, given the torque in direction opposite that of traction transferred from the drive wheels in case of braking. Advantageously, in the aforesaid energy recovery condition, the reversible electric machine 6, if connected by means of the first engagement means 7 to the second alternator 2, is electrically decoupled from the first electronic power converter 20, in order to avoid an overload of the battery group 19 with a current intensity peak. Advantageously, however, the same reversible electric machine 6 is not mechanically disconnected by controlling the first engagement means 7 to be moved into the first decoupling position during the braking, in order to prevent stress due to inertial variations. Indeed, it will suffice to not supply power to the electric machine 6 during braking, so that it remains idle and does not produce energy or braking torque.

The management of the energy flow between the different groups that make up the propulsion system of the vehicle, i.e. between: the converters 20, 21, the internal combustion engine 12; the first electric motor 2, the reversible electric machine 6, the battery group 19, in order to meet a given power request (torque and speed) by the driver, is the task of the main control unit ECU1. Such main control unit ECU1 is substantially interposed on one side between the control units ECU2 and ECU3 (in conventional torque) of the combustion engine 12 and the electric machines 2 and 6, and, on the other side, the algorithms for interpreting the will of the driver through the vehicle control unit ECU4 (transformation of the position of the acceleration and brake pedals with torque request) and the control unit for the single components (motors, transmission, brakes). The energy management algorithms contained in the CS control system and in particular in its main control unit ECU1, advantageously originate from criteria of minimization of the overall energy consumption (fuel and electrical energy), tied to the respect of an overall constant evolution of the charge state of the batteries 19, in addition to the physical limits of the components and constraints set by the drivability requirements. The control system CS of the vehicle 1, object of the present invention, through the propulsion configuration described in claim 1, and in particular through the different operating conditions described above, is capable of varying the propulsion of the vehicle 1 in a very versatile manner, allowing improved energy optimization possibilities, or improved pollution in the various situations where the vehicle may function. The passage between the abovementioned different operating conditions is indeed substantially subjected only to the logic settable in the control system CS, while physically there are no constraints for the transition between the different conditions, allowing extreme functioning versatility of the vehicle propulsion.

The finding thus conceived therefore attains the preset objects.

Of course, in the practical achievement thereof, it can also assume forms and configurations that are different from that illustrated above, without departing from the present protective scope.

In addition, all the details can be substituted by technically equivalent elements, and the size, shapes and materials used can be of any type according to requirements.

## Claims

1. Hybrid propulsion vehicle comprising:
- a first electric motor (2);
- means (19) for storing electrical energy;
- transmission means (5), which are mechanically coupled to said first electric motor (2) in order to transmit its drive torque to the drive wheels of said vehicle (1);
- a reversible electric machine (6), adapted to selectively operate as a generator for charging said means (19) for storing electrical energy or as a second electric motor, selectively mechanically couplable to said first electric motor (2) by means of first engagement means (7);
- an internal combustion engine (12) mechanically and selectively couplable to said reversible electric machine (6) by means of second engagement means (13);
- a first electronic power converter (20), electrically connected to said storage means (19) by means of a first electrical connection (22) and to said first electric motor (2) by means of a second electrical connection (23);
- a second electronic power converter (21), electrically connected to said storage means (19) by means of a third electrical connection (24) and to said reversible electric machine (6) by means of a fourth electrical connection (25);
- an electronic control system connected to said first electric motor (2), to said means (19) for storing electrical energy, to said reversible electric machine (6), to said internal combustion engine (12), to said first and second electronic power converter (20, 21), and to said first and second engagement means (13), in order to control them according to programmable operating modes;
said electronic control system comprising:
- at least one nominal traction condition in which said first converter (20) is actuated by said electronic control system to transform a first direct current received by said storage means (19), by means of said first electrical connection (22), into a first controlled current with which to set said first electric motor (2) in rotation by means of said second electrical connection (23);
- a high electric power traction condition in which said second converter (21) is actuated by said electronic control system to transform a second direct current received by said storage means (19) by means of said third electrical connection (24) into a second controlled current with which, by means of said fourth electrical connection (25), said reversible electric machine (6) is set in rotation as a second motor mechanically coupled in series to said first electric motor (2) by means of said first engagement means (7) and decoupled from said combustion engine (12) by means of said second engagement means (13) in order to increase the traction torque of said vehicle (1);
- an on-board recharging condition (1), in which said second converter (21) is actuated by said electronic control system to transform a first variable current of said reversible machine (6), operating as a generator mechanically coupled to said combustion engine (12) by means of said first engagement means (7) and decoupled from said first electric motor (2) by means of said second engagement means (13), into a first rectified direct current for charging said storage means (19) by means of said third electrical connection (24).
**characterized in that** said first engagement means (7) and at least one rotating member (16) of said second engagement means (13) are interposed between said first electric motor (2) and said reversible machine (6).

2. Hybrid propulsion vehicle according to claim 1, **characterized in that** said second engagement means (13) comprises an axial coupling group having at least a gear physically positioned between said first electric motor (2) and said reversible electric machine (6) laterally alongside the first engagement means (7) in order to reduce the overall bulk of the vehicle mechanism.

3. Hybrid propulsion vehicle according to claim 2, **characterized in that** said second engagement means comprises a second pulley 61, which bears a motion transmission belt 17 wound thereon, is fit on the shaft 10 of the reversible machine 6 and is interposed between the reversible electric machine 6 and the first engagement means 7.

4. Hybrid propulsion vehicle according to claim 1, **characterized in that** said control system comprises a mechanically-assisted condition in which:
- said first electric motor (2) receives said first controlled current from said first electronic converter (20) in order to generate a drive torque;
- said internal combustion engine (12) is mechanically coupled to said first electric motor (2), being mechanically coupled to said reversible machine (6) by means of said second engagement means (13), and said reversible machine (6) being mechanically coupled to said first electric motor (2) by means of said first engagement means (7), with said reversible electric machine (6) electrically deactivated.

5. Hybrid propulsion vehicle according to claim 4, **characterized in that** in said mechanically-assisted condition, said control system controls the revolutions of the shaft (40) of said first electric motor (2), which transmits the drive torque by means of said transmission means (5) to the drive wheels (4), as a function of the required torque, by varying the speed of said first electric motor (2) and maintaining the torque of the combustion engine (12) substantially constant in order to allow the optimization of its efficiency.

6. Hybrid propulsion vehicle according to claim 1, **characterized in that** said transmission means (5) are not interposed between said first electric motor (2) and said reversible machine (6), being arranged on the side of the first electric motor (2) opposite that where the reversible machine (6) is situated.

7. Hybrid propulsion vehicle according to claim 6, **characterized in that** the shaft (40) of said first electric motor (2) has a first end (40') mechanically connected, by means of said first engagement means (7), to the shaft (10) of said reversible machine (6) and an opposite second end (40"), mechanically connected to said transmission means (5).

8. Hybrid propulsion vehicle according to claim 1, **characterized in that** said control system comprises a purely endothermal traction condition in which said first motor and said reversible electric machine (6) are deactivated and said internal combustion engine (12) is mechanically coupled to said first electric motor (2), being mechanically coupled to said reversible machine (6) by means of said second engagement means (13), and said reversible machine (6) being mechanically coupled to said first electric motor (2) by means of said first engagement means (7).

9. Hybrid propulsion vehicle according to claim 1, **characterized in that** with said control system in recharging condition, at least a fraction of the rectified direct current generated by said second electronic converter (21) feeds said first electric motor (2) by means of a fifth electrical connection.

10. Hybrid propulsion vehicle according to any one of the preceding claims, **characterized in that** said first electric motor (2) is a reversible electric machine (6), and said control system comprises an energy recovery condition in which the shaft of said first electric motor (2) is controlled to decelerate through said transmission means (5) by the drive wheels of said vehicle (1), and said second converter (21) is controlled by said control system to transform a second variable current generated by said second reversible machine (6) operating as a second alternator into a second rectified direct current for charging said storage means (19) by means of said first electrical connection (22).

11. Hybrid propulsion vehicle according to claim 1, **characterized in that** said control system automatically assumes said recharging condition upon detection of a charge of said storage means (19) below a minimum charge threshold value.

12. Hybrid propulsion vehicle according to claim 1, **characterized in that** said first electric motor (2) and said reversible electric machine (6) can be connected together by means of said interposed first engagement means (7), in order to form a compact electrical assembly.

13. Hybrid propulsion vehicle according to claim 1, **characterized in that** said combustion engine (12) is a boxer engine.

14. Hybrid propulsion vehicle according to claim 9, **characterized in that** said combustion engine (12), said first electric motor (2) and said reversible electric machine (6) are contained in the same engine compartment of said vehicle (1).

15. Hybrid propulsion vehicle according to claim 1, in which said electronic control system comprises:
- a main electronic control unit (master ECU), which is connected:
- to a vehicle control unit (ECU4) comprising at least one sensor for detecting the position of a driver's manual control apparatus, in particular the accelerator, in order to generate a power request signal;
- to at least one first actuator (11) for controlling said first engagement means (7);
- to at least one second actuator (18) for controlling said second engagement means (13);
- to a unit (ECU3) for controlling an internal combustion engine (12), able to control the torque produced by the latter;
- to an electric power control unit (ECU2), able to control said first electric motor (2), said reversible electric machine (6), and said first and second electronic power converter (21).

## Patentansprüche

1. Fahrzeug mit Hybridantrieb, das Folgendes umfasst:
- einen ersten Elektromotor (2);
- Vorrichtungen zum Speichern elektrischer Energie (19);
- Übertragungsvorrichtungen (5), die mechanisch mit dem genannten ersten Elektromotor (2) gekoppelt sind, um das Antriebsmoment auf die Antriebsräder des genannten Fahrzeugs (1) zu übertragen;
- eine reversible Elektromaschine (6), die geeignet ist, wahlweise als Generator zum Aufladen der genannten Vorrichtungen zum Speichern elektrischer Energie (19) oder als zweiter Elektromotor eingesetzt und wahlweise mechanisch mit dem genannten ersten Elektromotor (2) über erste Verbindungselemente (7) gekoppelt zu werden;
- einen mechanisch und wahlweise mit der genannten reversiblen Elektromaschine (6) über zweite Verbindungselemente (13) koppelbaren Verbrennungsmotor (12);
- einen ersten Leistungsumformer (20), der über einen ersten elektrischen Anschluss (22) an die genannten Vorrichtungen zum Speichern (19) und über einen zweiten elektrischen Anschluss (23) an den genannten ersten Elektromotor (2) angeschlossen ist;
- einen zweiten Leistungsumformer (21), der über einen dritten elektrischen Anschluss (24) an die genannten Vorrichtungen zum Speichern (19) und über einen vierten elektrischen Anschluss (25) an die genannte reversible Elektromaschine (6) angeschlossen ist;
- ein an den genannten ersten Elektromotor (2), an die genannten Vorrichtungen zum Speichern elektrischer Energie (19), an die genannte reversible Elektromaschine (6), an den genannten Verbrennungsmotor (12), an den genannten ersten und zweiten Leistungsumformer (20, 21) und an die genannten ersten und zweiten Verbindungselemente (13) angeschlossenes elektronisches Steuersystem, um diese nach programmierbaren Betriebsbedingungen steuern zu können;
wobei das genannte elektronische Steuersystem Folgendes umfasst:
- mindestens einen Zustand mit Nennantrieb, in dem der genannte erste Leistungsumformer (20) von dem genannten elektronischen Steuersystem betätigt wird, um einen ersten, von den genannten Vorrichtungen zum Speichern (19) über den genannten ersten elektrischen Anschluss (22) erhaltenen Gleichstrom in einen kontrollierten Strom umzuwandeln, mit dem die Drehung des genannten ersten Elektromotors (2) über den genannten zweiten elektrischen Anschluss (23) gesteuert werden kann;
- einen Zustand mit Antrieb bei hoher elektrischer Leistung, in dem der genannte zweite Leistungsumformer (21) von dem genannten elektronischen Steuersystem angetrieben wird, um einen zweiten, von den genannten Vorrichtungen zum Speichern (19) erhaltenen Gleichstrom über den genannten dritten elektrischen Anschluss (24) in einen zweiten kontrollierten Strom umzuwandeln, mit dem er über den genannten vierten elektrischen Anschluss (25) die Drehung der genannten reversiblen Elektromaschine (6) steuert, die als zweiter Motor mechanisch über die genannten ersten Verbindungselemente (7) in Reihe mit dem genannten ersten Elektromotor (2) gekoppelt und von dem genannten Verbrennungsmotor (12) über die genannten zweiten Verbindungselemente (13) entkoppelt ist, um das Antriebsmoment des genannten Fahrzeugs (1) zu erhöhen;
- einen Zustand des Aufladens auf dem Fahrzeug (1), in dem der genannte zweite Leistungsumformer (21) von dem genannten elektronischen Steuersystem angetrieben wird, um einen ersten variablen Strom der genannten reversiblen Elektromaschine (6), die als Generator betrieben wird, der mechanisch über die genannten ersten Verbindungselemente (7) mit dem genannten Verbrennungsmotor (12) gekoppelt und über die genannten zweiten Verbindungselemente (13) von dem genannten ersten Elektromotor (2) entkoppelt ist, in einen ersten gleichgerichteten Gleichstrom umzuwandeln, um die genannten Vorrichtungen zum Speichern (19) über den dritten elektrischen Anschluss (24) aufzuladen;
**dadurch gekennzeichnet, dass** die genannten ersten Verbindungselemente (7) und mindestens ein drehendes Organ (16) der genannten zweiten Verbindungselemente (13) sich zwischen dem genannten ersten Elektromotor (2) und der genannten reversiblen Elektromaschine (6) befinden.

2. Fahrzeug mit Hybridantrieb nach Anspruch 1, **dadurch gekennzeichnet, dass** die genannten zweiten Verbindungselemente (13) eine axiale Kupplungsgruppe mit mindestens einem physisch zwischen dem ersten Elektromotor (2) und der genannten reversiblen Elektromaschine (6) seitlich neben den ersten Verbindungselementen (7) positionierten Getriebe umfassen, um die Gesamtabmessungen der Fahrzeugmechanik zu verringern.

3. Fahrzeug mit Hybridantrieb nach Anspruch 2, **dadurch gekennzeichnet, dass** die genannten zweiten Verbindungselemente eine zweite Riemenscheibe (61) umfassen, auf die ein Antriebsübertragungsriemen (17) aufgezogen ist und die auf die Welle (10) der reversiblen Elektromaschine (6) gepresst und zwischen reversibler Elektromaschine (6) und den ersten Verbindungselementen (7) eingesetzt ist.

4. Fahrzeug mit Hybridantrieb nach Anspruch 1, **dadurch gekennzeichnet, dass** das genannte Steuersystem einen mechanisch unterstützten Zustand umfasst, in dem:
- der genannte erste Elektromotor (2) den genannten ersten kontrollierten Strom von dem genannten ersten elektronischen Leistungsumformer (20) erhält, um ein Motordrehmoment zu erzeugen;
- der genannte Verbrennungsmotor (12) mechanisch mit dem ersten Elektromotor (2) gekoppelt ist, da er mechanisch über die genannten zweiten Verbindungselemente (13) mit der genannten reversiblen Elektromaschine (6) gekoppelt und die genannte reversible Elektromaschine (6) mechanisch über die genannten ersten Verbindungselemente (7) mit dem genannten ersten Elektromotor (2) gekoppelt ist, wobei die genannte reversible Elektromaschine (6) elektrisch deaktiviert ist.

5. Fahrzeug mit Hybridantrieb nach Anspruch 4, **dadurch gekennzeichnet, dass** es in dem genannten mechanisch von dem genannten Steuersystem unterstützten Zustand die Drehzahl der Welle (40) des genannten ersten Elektromotors (2) steuert, der das Motordrehmoment über die genannten Übertragungselemente (5) an die Antriebsräder (4) abhängig von dem verlangten Drehmoment überträgt und dabei die Drehzahl des genannten ersten Elektromotors (2) ändert und das Drehmoment des Verbrennungsmotors (12) im Wesentlichen konstant hält, um die Optimierung seiner Leistung zu gestatten.

6. Fahrzeug mit Hybridantrieb nach Anspruch 1, **dadurch gekennzeichnet, dass** die genannten Übertragungselemente (5) sich nicht zwischen dem genannten ersten Elektromotor (2) und der genannten reversiblen Elektromaschine (6) befinden, da sie auf der Seite des ersten Elektromotors (2) angeordnet sind, die der Seite, auf der sich die reversible Elektromaschine (6) befindet, gegenüberliegt.

7. Fahrzeug mit Hybridantrieb nach Anspruch 6, **dadurch gekennzeichnet, dass** die Welle (40) des genannten ersten Elektromotors (2) ein erstes Ende (40'), das mechanisch mit Hilfe der genannten ersten Verbindungselemente (7) an die Welle (10) der genannten reversiblen Elektromaschine (6) angeschlossen ist, und ein gegenüberliegendes zweites Ende (40"), das mechanisch an die genannten Übertragungselemente (5) angeschlossen ist, aufweist.

8. Fahrzeug mit Hybridantrieb nach Anspruch 1, **dadurch gekennzeichnet, dass** das genannte Steuersystem einen Zustand des rein endothermen Antriebs umfasst, in dem der genannte erste Motor und die genannte reversible Elektromaschine (6) deaktiviert sind und der Verbrennungsmotor (12) mechanisch an den genannten ersten Elektromotor (2) gekoppelt ist, der mechanisch über die genannten zweiten Verbindungselemente (13) mit der genannten reversiblen Maschine (6) gekoppelt ist, wobei die genannte reversible Elektromaschine (6) mit den genannten ersten Verbindungselementen (7) mechanisch mit dem genannten ersten Elektromotor (2) gekoppelt ist.

9. Fahrzeug mit Hybridantrieb nach Anspruch 1, **dadurch gekennzeichnet, dass** mit dem genannten Steuersystem im Ladezustand mindestens ein Bruchteil des von dem zweiten elektronischen Leistungsumformer (21) gleichgerichteten Gleichstroms über einen fünften elektrischen Anschluss den genannten ersten Elektromotor (2) versorgt.

10. Fahrzeug mit Hybridantrieb nach einem beliebigen der vorangegangenen Ansprüche, **dadurch gekennzeichnet, dass** es sich bei dem genannten ersten Elektromotor (2) um eine reversible Elektromaschine (6) handelt und das genannte Steuersystem einen Zustand der Energierückgewinnung umfasst, in dem die Welle des genannten ersten Elektromotors (2) bei Verlangsamung über die genannten Übertragungselemente (5) von den Antriebsrädern des genannten Fahrzeugs (1) gesteuert wird und der genannte zweite Leistungsumformer (21) von dem genannten Steuersystem gesteuert wird, um einen von der genannten zweiten reversiblen Elektromaschine (6) erzeugten zweiten variablen Strom umzuwandeln, die als zweiter Wechselstromgenerator in einem zweiten gleichgerichteten Gleichstrom zum Aufladen der genannten Vorrichtungen zum Speichern (19) über den genannten ersten Stromanschluss (22) wirkt.

11. Fahrzeug mit Hybridantrieb nach Anspruch 1, **dadurch gekennzeichnet, dass** das genannte Steuersystem automatisch in den genannten Ladezustand versetzt wird, wenn eine Ladung der genannten Vorrichtungen zum Speichern (19) unter einem Schwellenwert der Mindestladung gemessen wird.

12. Fahrzeug mit Hybridantrieb nach Anspruch 1, **dadurch gekennzeichnet, dass** der genannte erste Elektromotor (2) und die genannte reversible Elektromaschine (6) mittels dazwischen eingesetzten ersten Verbindungselementen (7) zusammengeschlossen werden können, um eine kompakte Elektrogruppe zu bilden.

13. Fahrzeug mit Hybridantrieb nach Anspruch 1, **dadurch gekennzeichnet, dass** es sich bei dem genannten Verbrennungsmotor (1) um einen Boxermotor handelt.

14. Fahrzeug mit Hybridantrieb nach Anspruch 9, **dadurch gekennzeichnet, dass** der genannte Verbrennungsmotor (12), der genannte erste Elektromotor (2) und die genannte reversible Elektromaschine (6) in demselben Motorraum des genannten Fahrzeugs (1) untergebracht sind.

15. Fahrzeug mit Hybridantrieb nach Anspruch 1, bei dem das genannte elektronische Steuersystem Folgendes umfasst:
- ein elektronisches Hauptsteuergerät (Master-ECU), das an Folgendes angeschlossen ist:
- an ein Fahrzeugsteuergerät (ECU4), das mindestens einen Sensor zum Messen der Position einer manuellen Steuerung des Fahrers umfasst, insbesondere einen Gashebel, um ein Leistungsanforderungssignal zu erzeugen;
- an mindestens einen ersten Stellantrieb (11) zum Steuern der genannten ersten Verbindungselemente (7);
- an mindestens einen zweiten Stellantrieb (18) zum Steuern der genannten zweiten Verbindungselemente (13);
- an ein Steuergerät (ECU3) des Verbrennungsmotors (12), das geeignet ist, das von Letzterem erzeugte Drehmoment zu steuern;
- an ein Leistungssteuergerät (ECU2), das geeignet ist, den genannten ersten Elektromotor (2), die genannte reversible Elektromaschine (6) und den genannten ersten und zweiten Leistungsumformer (21) zu steuern.

## Revendications

1. Véhicule à propulsion hybride comprenant :
- un premier moteur électrique (2) ;
- des moyens accumulateurs d'énergie électrique (19) ;
- des moyens de transmission (5), qui sont mécaniquement couplés à ce premier moteur électrique (2) pour transmettre le couple moteur aux roues motrices dudit véhicule (1) ;
- une machine électrique réversible (6), apte à fonctionner de manière sélective en tant que générateur pour charger lesdits moyens accumulateurs d'énergie électrique (19) ou en tant que deuxième moteur électrique, pouvant être couplé mécaniquement de manière sélective audit premier moteur électrique (2) à l'aide de premiers moyens d'embrayage (7) ;
- un moteur à combustion interne (12) pouvant être couplé mécaniquement et de manière sélective à cette machine électrique réversible (6) à l'aide de deuxièmes moyens d'embrayage (13) ;
- un premier convertisseur électronique de puissance (20), connecté électriquement audits moyens accumulateurs (19) à l'aide d'une première connexion électrique (22) et audit premier moteur électrique (2) à l'aide d'une deuxième connexion électrique (23) ;
- un deuxième convertisseur électronique de puissance (21), connecté électriquement audits moyens accumulateurs (19) à l'aide d'une troisième connexion électrique (24) et à cette machine électrique réversible (6) à l'aide d'une quatrième connexion électrique (25) ;
- un système de contrôle électronique connecté audit premier moteur électrique (2), audits moyens accumulateurs d'énergie électrique (19), à ladite machine électrique réversible (6), audit moteur à combustion interne (12), audits premier et deuxième convertisseur électronique de puissance (20, 21), et auxdits premier et deuxième moyens d'embrayage (13), pour les contrôler selon des modes de fonctionnement programmables ;
ledit système de contrôle électronique comprenant :
- au moins une condition de traction nominale dans laquelle ledit premier convertisseur (20) est entraîné par ledit système de contrôle électronique pour transformer un premier courant continu reçu par lesdits moyens accumulateurs (19), à l'aide de cette première connexion électrique (22), dans un premier courant contrôlé avec lequel ce premier moteur électrique (2) peut être piloté en rotation à l'aide de cette deuxième connexion électrique (23) ;
- une condition de traction à puissance électrique élevée dans laquelle ce deuxième convertisseur (21) est entraîné par ledit système de contrôle électronique pour transformer un deuxième courant continu reçu par lesdits moyens accumulateurs (19) à l'aide de cette troisième connexion électrique (24) dans un deuxième courant contrôlé, avec lequel cette machine électrique réversible (6) peut être pilotée en rotation à l'aide de cette quatrième connexion électrique (25), en tant que deuxième moteur mécaniquement couplé en série audit premier moteur électrique (2) à l'aide de ces premiers moyens d'embrayage (7) et découplé dudit moteur à combustion (12) à l'aide de ces deuxièmes moyens d'embrayage (13) pour augmenter le couple de traction dudit véhicule (1) ;
- une condition de recharge à bord du véhicule (1), dans laquelle ce deuxième convertisseur (21) est entrainé par ledit système de contrôle électronique pour transformer un premier courant variable de ladite machine électrique réversible (6), fonctionnant en tant que générateur mécaniquement couplé audit moteur à combustion (12) à l'aide de ces premiers moyens d'embrayage (7) et découplé de ce premier moteur électrique (2) à l'aide de ces deuxièmes moyens d'embrayage (13), dans un premier courant continu redressé pour la charge desdits moyens accumulateurs (19) à l'aide de cette troisième connexion électrique (24) ;
**caractérisé en ce que** ces premiers moyens d'embrayage (7) et au moins un organe rotatif (16) desdits deuxièmes moyens d'embrayage (13) sont interposés entre ce premier moteur électrique (2) et cette machine réversible (6).

2. Véhicule à propulsion hybride selon la revendication 1, **caractérisé en ce que** lesdits deuxièmes moyens d'embrayage (13) comprennent un groupe d'accouplement axial ayant au moins un engrenage physiquement disposé entre le premier moteur électrique (2) et cette machine électrique réversible (6) à côté, latéralement par rapport aux premiers moyens d'embrayage (7) pour réduire l'encombrement global de la mécanique du véhicule.

3. Véhicule à propulsion hybride selon la revendication 2, **caractérisé en ce que** lesdits deuxièmes moyens d'embrayage comprennent une deuxième poulie (61), qui entraine une courroie de transmission du mouvement (17) enroulée, est embrevée à l'arbre (10) de la machine réversible (6) et est interposée entre la machine électrique réversible (6) et les premiers moyens d'embrayage (7).

4. Véhicule à propulsion hybride selon la revendication 1, **caractérisé en ce que** ledit système de contrôle comprend une condition assistée mécaniquement dans laquelle :
- ce premier moteur électrique (2) reçoit ce premier courant contrôlé par ce premier convertisseur électronique (20) pour produire un couple moteur ;
- ce moteur à combustion interne (12) est mécaniquement couplé à ce premier moteur électrique (2) étant mécaniquement couplé à ladite machine réversible (6) à l'aide de ces deuxièmes moyens d'embrayage (13) et ladite machine réversible (6) étant mécaniquement couplée à ce premier moteur électrique (2) à l'aide de ces premiers moyens d'embrayage (7), cette machine électrique réversible (6) étant désactivée électriquement.

5. Véhicule à propulsion hybride selon la revendication 4, **caractérisé en ce que** ledit système de contrôle, dans cette condition mécaniquement assistée, contrôle les tours de l'arbre (40) de ce premier moteur électrique (2), qui transmet le couple moteur à l'aide de ces moyens de transmission (5) aux roues motrices (4), en fonction du couple requis, en variant la vitesse dudit premier moteur électrique (2) et en maintenant le couple du moteur à combustion (12) essentiellement constant, pour permettre d'en optimiser le rendement.

6. Véhicule à propulsion hybride selon la revendication 1, **caractérisé en ce que** lesdits moyens de transmission (5) ne sont pas interposés entre ce premier moteur électrique (2) et cette machine réversible (6), étant disposés sur le côté du premier moteur électrique (2) opposé au côté où la machine réversible (6) est placée.

7. Véhicule à propulsion hybride selon la revendication 6, **caractérisé en ce que** l'arbre (40) dudit premier moteur électrique (2) a une première extrémité (40') mécaniquement reliée à l'arbre (10) de cette machine réversible (6), à l'aide de ces moyens d'embrayage (7), et une deuxième extrémité opposée (40"), mécaniquement reliée à ces moyens de transmission (5).

8. Véhicule à propulsion hybride selon la revendication 1, **caractérisé en ce que** ledit système de contrôle comprend une condition de traction purement endothermique dans laquelle ce premier moteur et cette machine électrique réversible (6) sont désactivés et ce moteur à combustion interne (12) est mécaniquement couplé à ce premier moteur électrique (2) étant mécaniquement couplé à cette machine réversible (6), à l'aide de ces deuxièmes moyens d'embrayage (13), et cette machine réversible (6) étant mécaniquement couplée à ce premier moteur électrique (2), à l'aide de ces premiers moyens d'embrayage (7).

9. Véhicule à propulsion hybride selon la revendication 1, **caractérisé en ce que**, avec ce système de contrôle dans une condition de recharge, au moins une fraction du courant continu redressé produit par ce deuxième convertisseur électronique (21) alimente ce premier moteur électrique (2) à l'aide d'une cinquième connexion électrique.

10. Véhicule à propulsion hybride selon une des revendication précédentes, **caractérisé en ce que** ledit premier moteur électrique (2) est une machine électrique réversible (6), et **en ce que** ledit système de contrôle comprend une condition de récupération d'énergie dans laquelle l'arbre de ce premier moteur électrique (2) est contrôlé en décélération à l'aide desdits moyens de transmission (5) par les roues motrices de ce véhicule (1), et ce deuxième convertisseur (21) est contrôlé par ce système de contrôle pour transformer un deuxième courant variable produit par cette deuxième machine réversible (6) fonctionnant en tant que deuxième alternateur dans un deuxième courant continu redressé pour la charge desdits moyens accumulateurs (19) à l'aide de cette première connexion électrique (22).

11. Véhicule à propulsion hybride selon la revendication 1, **caractérisé en ce que** ledit système de contrôle applique automatiquement cette condition de recharge lorsqu'une charge desdits moyens accumulateurs (19) inférieure à une valeur seuil de charge minimale est détectée.

12. Véhicule à propulsion hybride selon la revendication 1, **caractérisé en ce que** ledit premier moteur électrique (2) et ladite machine électrique réversible (6) peuvent être reliés entre eux à l'aide de ces premiers moyens d'embrayage (7) interposés afin de former un groupe électrique compact.

13. Véhicule à propulsion hybride selon la revendication 1, **caractérisé en ce que** ledit moteur à combustion (12) est un moteur boxer.

14. Véhicule à propulsion hybride selon la revendication 9, **caractérisé en ce que** ledit moteur à combustion (12), ledit premier moteur électrique (2) et ladite machine électrique réversible (6) sont logés dans le même compartiment moteur dudit véhicule (1).

15. Véhicule à propulsion hybride selon la revendication 1, dans lequel ledit système de contrôle électronique comprend :
- une unité de contrôle électronique principale (master ECU), qui est connectée :
- à une unité de contrôle du véhicule (ECU4) comprenant au moins un détecteur de la position d'une commande manuelle du conducteur, en particulier l'accélérateur, pour produire un signal de puissance requise ;
- à au moins un premier actionneur (11) pour contrôler lesdits premiers moyens d'embrayage (7) ;
- à au moins un deuxième actionneur (18) pour contrôler lesdits deuxièmes moyens d'embrayage (13) ;
- à une unité de contrôle du moteur (ECU3) à combustion interne (12), susceptible de contrôler le couple produit par ce dernier ;
- à une unité de contrôle de la puissance électrique (ECU2), susceptible de contrôler ledit premier moteur électrique (2), ladite machine électrique réversible (6), et lesdits premier et deuxième convertisseur électronique de puissance (21).
